# FASCICULE DE BREVET EUROPEEN

(11) **EP 2 344 727 B1**
(45) Date de publication et mention de la délivrance du brevet: **22.08.2012**
(21) Numéro de dépôt: 09817292.7
(22) Date de dépôt: 29.09.2009
(51) Int. Cl.: F01D 17/16, F01D 17/20, F02C 6/08, F02C 9/18, F02C 9/22

(54) **SYSTEME DE COMMANDE D'EQUIPEMENTS A GEOMETRIE VARIABLE D'UN MOTEUR A TURBINE A GAZ COMPORTANT NOTAMMENT UNE LIAISON A BARILLET**
SYSTEM ZUR STEUERUNG VON GERÄTEN MIT VARIABLER GEOMETRIE EINES GASTURBINENMOTORS, IM BESONDEREN MIT EINER ZYLINDERVERBINDUNG
SYSTEM FOR CONTROLLING VARIABLE GEOMETRY APPARATUSES OF A GAS TURBINE ENGINE PARTICULARLY COMPRISING A BARREL LINK

(30) Priorité: 30.09.2008 FR 0856570
(43) Date de publication de la demande: 20.07.2011
(73) Titulaire: Snecma, 75015 Paris (FR)
(72) Inventeur: COLOTTE, Baptiste, Benoît, F-77000 Melun (FR); GAULLY, Bruno, Robert, F-91630 Marolles en Hurepoix (FR)
(74) Mandataire: Gevers France
(86) Numéro de dépôt international: PCT/EP2009/062624
(87) Numéro de publication internationale: WO 2010/037750

(56) Documents cités:
- EP-A- 1 398 464
- EP-A- 1 724 471
- WO-A-2007/116319
- DE-B- 1 224 563
- FR-A- 2 445 439
- FR-A- 2 633 046

## Description

La présente invention se rapporte au domaine général de la commande d'équipements à géométrie variable d'un moteur à turbine à gaz, turboréacteur notamment. L'invention concerne plus particulièrement l'optimisation de la commande de plusieurs équipements faisant partie de corps distincts du moteur à turbine à gaz.

Par "équipement à géométrie variable", on entend ici un équipement relié à un organe de commande et dont la dimension, la forme, la position et/ou la vitesse est ou sont susceptible(s) d'être modifiée(s) en fonction d'événements détectés ou de paramètres définis, pour agir sur le fonctionnement du moteur. Des exemples d'équipements à géométrie variable sont des vannes de décharge d'air du compresseur (à ouverture variable), des aubes fixes de compresseur à angle de calage variable, des aubes de turbine dont le jeu au sommet est variable, des pompes à carburant à débit variable, etc.

Le terme corps désigne un sous-ensemble du moteur à turbine à gaz, comportant comme organes principaux un compresseur et une turbine assemblés sur un même axe. Il peut être multicorps. Un moteur double corps comporte un corps désigné haute pression et un corps désigné basse pression. Chaque corps comporte un compresseur et une turbine, dont les aubes sont entraînées en rotation autour de l'axe de l'arbre sur lequel elles sont montées.

En général, les différents corps d'un moteur à turbine à gaz sont conçus pour fonctionner de manière indépendante les uns des autres. Leurs vitesses de rotation sont indépendantes, même si elles sont liées ou corrélées dans certains régimes de fonctionnement.

Pour commander des équipements à géométrie variable faisant partie de corps différents, on prévoit pour ces équipements distincts des systèmes de commande distincts : deux circuits de commande, deux actionneurs, deux sources de puissance, etc. Il s'ensuit que la masse, le coût et l'encombrement d'un tel système de commande des équipements sont relativement élevés. Une telle configuration est celle retenue dans la demande de brevet européen de la demanderesse, publiée sous le numéro EP 1 724 472.

Par exemple, le compresseur du corps basse pression peut comporter une ou plusieurs vannes de décharge d'air (souvent désignées VBV, qui est l'acronyme de leur dénomination anglaise "Variable Bleed Valve"), tandis que le compresseur du corps haute pression peut comporter un ou plusieurs étages d'aubes de stator à angle de calage variable (souvent désignés VSV, qui est l'acronyme de leur dénomination anglaise "Variable Stator Vanes"). Pour diminuer la masse de ces équipements et de leurs organes de commande, il est envisageable de ne pas installer de VBV. Si l'économie ainsi réalisée est conséquente (on supprime les actionneurs, les servovalves, les canalisations, les harnais, etc., qui leur sont associés), les inconvénients sont importants, notamment en régime de ralenti si de l'eau ou de la grêle pénètre dans le moteur, entraînant un risque accru d'extinction de celui-ci.

La demande de brevet FR 2 445 439 de la société General Electric Company décrit un moyen unique pour commander des vannes de décharge d'air d'un étage basse pression et des étages de stator à angle de calage variable d'un étage haute pression, mais ce moyen commande les deux équipements essentiellement de façon séquentielle, seules les aubes de stator étant actionnées lors du fonctionnement normal de la turbomachine (c'est à dire au dessus du régime de ralenti). Le document DE 1224563 décrit également un système de commande d'au moins deux équipements à géométrie variable de l'art antérieur.

L'invention vise à proposer un moteur à turbine à gaz avec des équipements à géométrie variable appartenant à des corps différents du moteur et un système de commande de ces équipements qui soit optimisé.

C'est ainsi que l'invention concerne un système de commande d'au moins deux équipements à géométrie variable d'un moteur à turbine à gaz, présentant les caractéristiques de la revendication 1.

En utilisant un seul actionneur pour la commande de plusieurs (au moins deux) équipements à géométrie variable, le système de commande permet de réduire le nombre de pièces du moteur et ainsi d'atteindre l'objectif de l'invention. La masse, le volume et le coût d'un second système de commande sont, au moins en grande partie, évités, puisque les équipements des premier et second corps sont actionnés par le même actionneur.

Selon une forme de réalisation, le système de commande est apte à commander plus de deux équipements à géométrie variable à l'aide d'un unique actionneur.

Selon une forme de réalisation, le premier corps étant entraîné à une vitesse de rotation, l'actionneur est commandé par la vitesse de rotation du premier corps.

Ainsi, l'équipement du second corps est commandé par la vitesse de rotation du premier corps, par le truchement de l'actionneur.

Selon une forme particulière de réalisation le premier corps est un corps haute pression et le deuxième corps un corps basse pression.

En particulier, le moteur à turbine à gaz comportant un compresseur basse pression et un compresseur haute pression, l'équipement à géométrie variable du compresseur basse pression est commandé par la vitesse de rotation du compresseur haute pression.

Selon une forme de réalisation, dans le cas d'un moteur à turbine à gaz avec un corps haute pression et un corps basse pression, les équipements à géométrie variable du corps haute pression se situent à proximité du corps basse pression (par exemple à proximité du côté amont du corps haute pression).

Selon une forme de réalisation particulière dans ce cas, le moteur à turbine à gaz est à double-corps, avec un corps haute pression et un corps basse pression. De préférence dans ce cas, le ou les étages d'aubes de stator à angle de calage variable fait ou font partie du corps haute pression, le premier équipement commandé par le système de commande faisant partie du corps basse pression.

Selon une forme de réalisation particulière dans ce cas, l'étage d'aubes comporte une pluralité d'aubes, montées chacune de façon pivotante sur un carter de la turbomachine, et un anneau de commande entourant le carter est relié à chacune des aubes de l'étage par l'intermédiaire de leviers, l'actionneur étant apte à entraîner en rotation l'anneau de commande de l'étage par l'intermédiaire d'un organe pilote monté sur le carter.

Selon une forme de réalisation, un équipement à géométrie variable est une vanne de décharge d'air de la turbomachine. Cet équipement peut comprendre une vanne ou une pluralité de vannes de décharge d'air. Il s'agit par exemple d'une vanne de décharge d'air du type VBV en aval du compresseur basse pression.

Dans ce cas particulier, l'invention présente les avantages suivants :
On a besoin d'un seul jeu d'actionneurs au lieu de deux, ainsi que des servitudes associées à savoir les canalisations, les servovalves, les sorties sur le HMU ou moteur électrique, etc.

On conserve un degré de liberté sur les performances du booster sans ajout de géométrie variable complète.

On gagne en capacité de maintenance : en effet la suppression de l'actionnement VBV élimine les risques de pannes sur cette géométrie variable.

On préserve la capacité à évacuer de l'eau ou de la grêle à bas régime. Il s'ensuit une meilleure robustesse à l'extinction de la chambre au ralenti vis à vis d'une architecture booster sans VBV.

Le système électrique est simplifié. Une boucle locale d'asservissement est supprimée : sortie calculateur, harnais, capteur de retour de position (TBC), dimensionnement calculateur réduit...).

Le système de commande de l'invention peut aussi être adapté pour la commande de différents types d'équipements. Outre ceux présentés ci-dessus, les équipements à géométrie variable peuvent notamment comporter ou former un élément de l'un ou plusieurs des dispositifs suivants :
- une vanne de décharge d'air du compresseur haute pression à ouverture proportionnelle (souvent désignée par l'expression anglaise "Transient Bleed Valve" (d'acronyme TBV) ou "Start Bleed valve" (d'acronyme SBV));
- une vanne de décharge d'air du compresseur haute pression tout ou rien (souvent désignée par l'expression anglaise "Handling Bleed Valve" (d'acronyme HBV)) ;
- une vanne de régulation d'un débit d'air contribuant au contrôle de jeu dans une turbine basse pression (souvent désigné par l'expression anglaise "Low Pressure Turbine Active Clearance Control" (d'acronyme LPTACC)), ou dans une turbine haute pression (souvent désigné par l'expression anglaise "High Pressure Turbine Active Clearance Control" (d'acronyme HPTACC)).

Selon une forme de réalisation, dans le système de commande, l'actionneur comporte un organe de commande mobile dont les déplacements transmettent la commande aux équipements à géométrie variable. L'organe de commande peut par exemple comporter le bras d'un vérin.

Selon une forme de réalisation, l'actionneur est agencé pour actionner le premier équipement à géométrie variable en faisant varier un paramètre dans une plage d'actionnement du premier équipement, l'actionneur étant agencé pour actionner le deuxième équipement à géométrie variable en faisant varier le même paramètre dans une plage d'actionnement du second équipement.

Le paramètre de l'actionneur indiqué ci-dessus peut par exemple être la position de l'organe d'actionnement de l'actionneur. Ainsi, ce paramètre peut être la position de l'extrémité du bras d'un vérin. Ainsi, dans ce cas, faire varier ce paramètre signifie déplacer l'extrémité du bras du vérin ou la position de l'extrémité opérante de l'actionneur.

Selon une forme de réalisation préférée, le système de commande dans lequel l'actionneur commande une tige sur laquelle est monté un organe de commande à barillet, l'organe de commande à barillet entraînant l'un des deux équipements et étant lié à ladite tige par une liaison par laquelle il est entraîné, ladite liaison comprenant un pion mobile dans une piste de guidage, le profil de la piste de guidage déterminant la loi d'actionnement dudit équipement en fonction du déplacement de la tige de l'actionneur.

Selon un mode de réalisation, la tige entraîne l'autre équipement.

Selon un autre mode de réalisation le système comprend un deuxième organe de commande à barillet entraînant l'autre équipement et étant entraîné par la tige également par une liaison comprenant un pion mobile dans une piste de guidage, le profil de la piste de guidage déterminant la loi d'actionnement dudit autre équipement en fonction du déplacement de la tige commandée par l'actionneur.

Lorsque le paramètre d'actionnement varie dans un intervalle situé en dehors de la plage d'actionnement d'un équipement, ce dernier n'est pas actionné par l'actionneur. Un tel intervalle de valeurs du paramètre de l'actionneur, dans laquelle aucune action n'est effectivement appliquée à l'équipement considéré, constitue pour ledit équipement une "course morte". Dans une telle plage, quelles que soient les variations du paramètre, l'actionneur n'agit pas (ou pas significativement) sur l'équipement considéré.

Selon une forme de réalisation particulière, au moins une partie de la plage d'actionnement du premier équipement est hors de la plage d'actionnement de second équipement.

La commande par un actionneur unique de deux équipements à géométrie variable peut être facilitée par le fait que les plages d'actionnements des deux équipements ne se correspondent pas totalement, permettant hors de la zone commune de n'actionner qu'un seul équipement.

Selon une autre forme de réalisation particulière, les plages d'actionnement des premier et deuxième équipements sont disjointes, c'est-à-dire que la plage d'actionnement du premier équipement est entièrement hors de la plage d'actionnement du second équipement (les plaques ne se recoupent pas).

Ainsi, les équipements peuvent être actionnés de manière séquentielle. En effet, lorsque l'on fait varier le paramètre de l'actionneur dans la plage d'actionnement du premier équipement, ces variations n'induisent sensiblement aucun mouvement, aucune conséquence sur le second équipement, et vice-versa.

Selon une forme de réalisation particulière, la plage d'actionnement de l'un des premier et deuxième équipements est entièrement contenue dans la plage d'actionnement de l'autre équipement.

Dans ce cas, les équipements sont actionnés simultanément dans leur zone commune, ce qui peut présenter des avantages selon la nature des équipements. Une telle forme de réalisation peut permettre de prévoir une amplitude d'actionnement plus importante.

Selon une forme de réalisation particulière dans ce cas, la plage d'actionnement de l'un des équipements a une amplitude très inférieure à l'amplitude totale de la plage d'actionnement de l'autre équipement; par exemple, elle peut représenter moins de 20% ou moins de 10% de cette plage. De la sorte, lorsque la plage de l'équipement à la plage d'actionnement réduite est incluse dans la plage de l'autre équipement, les actions de commande de l'équipement n'entrainent qu'une variation faible et/ou peu sensible de la commande de l'autre équipement. Cette disposition facilite la commande, avec un seul système de commande, de deux équipements.

Le système de commande est de préférence agencé pour que les variations du paramètre de l'actionneur entre les bornes de sa plage d'actionnement suffisent pour actionner les équipements avec une amplitude suffisante.

Selon une forme de réalisation, la liaison entre l'actionneur et l'un des équipements comporte un dispositif de débrayage, apte à débrayer l'entrainement de cet équipement par l'actionneur sur une plage de valeurs du paramètre d'actionnement. Cette plage de valeurs est donc située en dehors de la plage d'actionnement de l'équipement considéré. Ainsi, le dispositif de débrayage permet de réserver un intervalle de la plage d'actionnement à la seule commande de l'autre (ou des autres) équipement(s). Cela peut être essentiel lorsque l'équipement considéré ne doit pas être affecté alors même que la commande de l'un des autres équipements commandés varie.

Selon un mode de réalisation, le système de commande comporte en outre des moyens de rappel maintenant un organe de commande de l'un des équipements dans une position prédéterminée, au moins lorsque le paramètre de l'actionneur varie dans un intervalle situé à l'extérieur de la plage d'actionnement de l'équipement.

L'invention concerne encore un moteur à turbine à gaz équipé du système de commande présenté ci-dessus.

L'invention sera mieux comprise à l'aide de la description suivante de la forme de réalisation préférée du moteur et du système de l'invention, en référence aux planches de dessins annexées, sur lesquelles :
- la figure 1 représente en coupe axiale une partie d'un turboréacteur de l'art antérieur comportant une vanne de décharge VBV et des ailettes de stator à calage variable
- la figure 2 représente une vue en perspective d'un système de commande de VSV selon l'art antérieur ;
- la figure 3 est une vue schématique de dessus d'un dispositif de commande de la position des deux équipements ;
- la figure 4 est une vue schématique de côté du dispositif de la figure 3;
- la figure 5 est une vue schématique d'une autre forme de réalisation avec un seul organe de commande à barillet ;
- la figure 5A est une coupe de la figure 5 selon la direction V-V.
- les figures 6 et 7 sont des courbes donnant la position des aubes de stator et des vannes de décharge en fonction du régime du moteur, dans le cas d'un recouvrement et dans le cas d'une absence de recouvrement des plages d'ouverture et de fermeture des deux équipements.

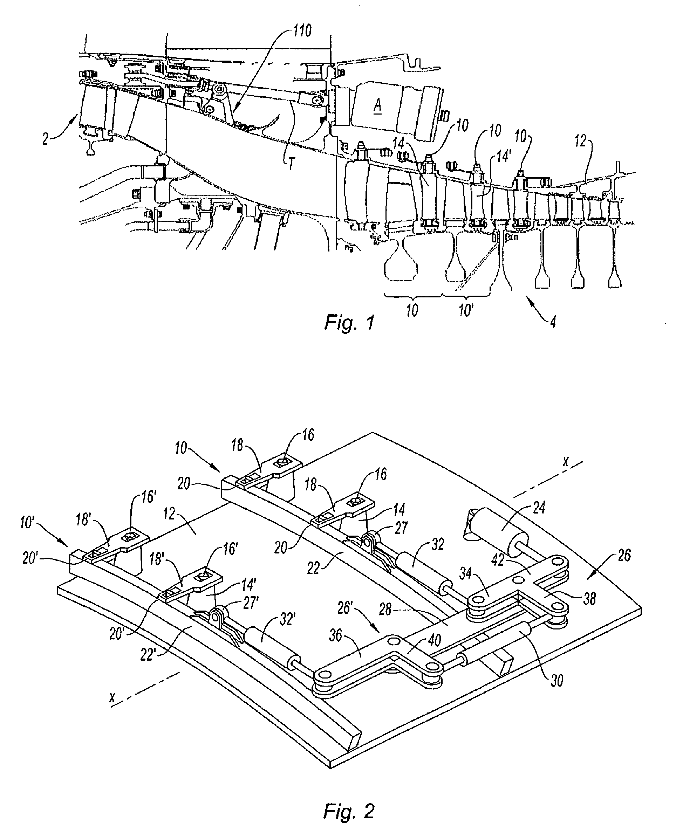

De manière connue comme on l'a représenté sur les figures 1 et 2, un moteur à turbine à gaz à application dans le domaine aéronautique tel qu'un turboréacteur, ici d'axe X-X, comporte, d'amont en aval, une soufflante, un compresseur basse pression 2, un compresseur haute pression 4, une chambre de combustion, une turbine haute pression, une turbine basse pression et une tuyère d'éjection des gaz (non représentés). Le compresseur et la turbine haute pression sont solidaires d'un même arbre, dit haute pression, et appartiennent ainsi au corps haute pression du moteur ou premier corps tournant à une première vitesse, tandis que le compresseur et la turbine basse pression sont solidaires d'un même arbre, dit basse pression, et appartiennent ainsi au corps basse pression du moteur ou deuxième corps tournant à une deuxième vitesse.

Ci-après, on utilisera les abréviations BP pour basse pression et HP pour haute pression.

Le compresseur HP 4 comporte au moins un étage formé d'une roue d'aubes mobiles et d'une roue d'aubes fixes (encore dénommées aubes de stator). Chaque étage est formé d'une pluralité d'aubes disposées radialement autour de l'axe X-X de la turbomachine. En l'espèce, le compresseur HP comporte une pluralité d'étages, avec une alternance de roues d'aubes mobiles et de roues d'aubes fixes. Les aubes sont enveloppées par un carter 12 cylindrique qui est centré sur l'axe X-X de la turbomachine.

Parmi les roues d'aubes fixes, au moins un étage 10 comporte des aubes 14 dites à angle de calage variable. Chaque aube 14 est montée pivotante autour d'un axe 16 (ou pivot) qui traverse le carter 12. La position angulaire de chaque aube 14 peut être réglée par entraînement en rotation de son pivot 16.

L'étage 10 d'aubes à calage variable forme un premier équipement à géométrie variable, appartenant au corps HP (puisqu'il appartient au compresseur HP). Le paramètre variable de cet équipement est l'angle des aubes 14; en l'espèce, toutes les aubes 14 sont entraînées simultanément en rotation, grâce à un anneau 22 de commande de l'étage 10 d'aubes 14.

L'anneau de commande 22 est de forme globalement circulaire; il entoure le carter 12 et est centré sur l'axe X-X de la turbomachine. La modification synchronisée de la position angulaire des aubes 14 est ainsi obtenue par une rotation de l'anneau de commande 22 autour de l'axe X-X du moteur, de manière connue.

Sur la figure 2, on a représenté un mécanisme de commande synchronisée de deux étages d'aubes statoriques, 10 et 10' de l'art antérieur. Le système de commande est agencé pour commander la rotation des anneaux 22 et 22' de commande des étages 10 et 10' d'aubes à angle de calage variable.

Le système de commande comporte un actionneur 24, ici un vérin, qui est relié mécaniquement à l'étage 10 pour entraîner en rotation les aubes de stator. A cet effet, chaque pivot 16, 16' des aubes à calage variable 14, 14' est relié à une extrémité d'une biellette 18, 18' de commande dont l'autre extrémité est articulée autour d'un tourillon 20, 20' fixé sur l'anneau de commande 22, 22' et s'étendant radialement par rapport à lui.

L'anneau comporte au moins une chape 27, 27' à laquelle est fixée une extrémité d'une bielle 32, 32' de commande, de type ridoir à vis, s'étendant sensiblement tangentiellement à l'anneau 22, 22'. L'autre extrémité de la bielle de commande 32 est solidaire d'un organe de renvoi 26, 26', monté pivotant sur un boîtier 28 du carter 12 du compresseur. L'organe de renvoi pilote 26 est en forme de T. La bielle de commande 32 est fixée à une extrémité d'une première branche 34 de l'organe de renvoi pilote 26, l'extrémité de la tige du vérin 24 étant fixée, de manière articulée, à l'extrémité d'une deuxième branche 42 qui se trouve sensiblement dans le prolongement de la première branche 34.

L'organe de renvoi suiveur 26' est en forme de L avec une branche 36 reliée à la bielle 32' et une branche 40 reliée par l'intermédiaire d'une barre de synchronisation à la troisième branche 38 du T. L'actionneur (vérin) 24 peut entraîner en rotation l'anneau de commande 22 de l'étage 10 d'aubes à calage angulaire variable par l'intermédiaire de l'organe de renvoi pilote 26, qui transmet le mouvement du vérin 24 à la bielle de commande 32 qui elle-même transmet le mouvement à l'anneau 22 dont elle est solidaire en translation (curviligne). L'actionneur entraîne en rotation l'anneau de commande 22' par l'intermédiaire de la barre de synchronisation 30. Le vérin 24 est commandé par une unité de commande électronique. Ses mouvements sont fonction de la vitesse N2 de rotation du compresseur HP.

Le moteur, comme on le voit sur la figure 1, comporte un deuxième équipement 110 à géométrie variable. Il s'agit en l'espèce d'une vanne de décharge d'air, du type VBV. Le paramètre variable de cet équipement 110 est l'angle d'ouverture de la vanne de décharge 110. Cet équipement 110 est disposé en aval du compresseur BP. La fonction de la vanne VBV 110 est de décharger de l'air à la sortie du compresseur BP 2 en fonction de conditions de fonctionnement définies. Le deuxième équipement 110 comporte généralement une pluralité de telles vannes.

Selon l'art antérieur l'équipement 110 est commandé par un système qui lui est propre. Sur la figure 1 on voit l'actionneur A qui agit par l'intermédiaire d'une tringlerie T sur la vanne.

Conformément à l'invention, on prévoit un système qui commande conjointement les deux équipements. Ainsi l'actionneur 24 qui commande les aubes VSV, commande également le déplacement d'un organe 115 de commande du second équipement 110, à l'aide d'un dispositif spécifique.

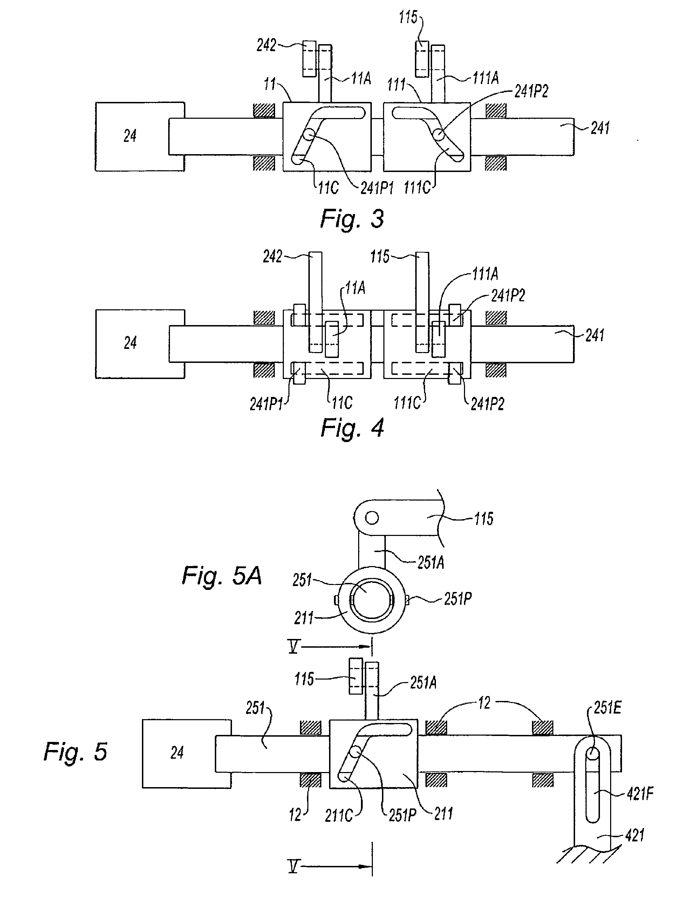

En se référant aux figures 3 et 4, on voit l'actionneur 24 dont la tige et sa liaison au bras 42 ont été modifiées. La tige 241 de l'actionneur est toujours mobile en translation. Elle coulisse dans un premier barillet 11 et un deuxième barillet 111. Ces deux barillets sont cylindriques et bloqués axialement. Ils peuvent cependant pivoter autour de l'axe de la tige 241, en étant supportés sur la tige par un palier à billes par exemple. Ils sont pourvus chacun de deux pistes de guidage, 11C et 111C respectivement, dans lesquelles sont guidés des pions 241P1 et 241P2 radiaux et solidaires de la tige 241. Chaque barillet 11 et 111 comporte également un ergot radial 11A et 111A respectivement. Les ergots sont reliés par une attache rotulante à un organe de commande 242 pour le barillet 11 et 115 pour le barillet 111. L'organe 242 est relié au bras de commande, tel que 42, du premier équipement; ici il s'agit de l'équipement des VSV. L'organe de commande 115 est relié au deuxième équipement 110 qu'il commande, ici il s'agit des vannes de décharge VBV.

Le fonctionnement du système d'actionnement est le suivant. L'actionneur 24 en déplaçant axialement la tige 241 agit sur les barillets 11 et 111 par l'intermédiaire des pions 241P1 et 241P2 qui coulissent à l'intérieur des pistes de guidage 11CA et 111C respectivement. Dans cet exemple la tige 241 ne peut tourner sur elle-même et les barillets sont montés rotatifs et coulissants sur la tige, par un montage à roulement à billes par exemple, tout en étant bloqués axialement par rapport au carter. Ainsi le déplacement des pions à l'intérieur des pistes de guidage entraîne-t-il la rotation des barillets autour de l'axe de la tige de l'actionneur selon le profil des pistes. On comprend qu'il suffit d'agencer correctement les pistes de guidage 11C et 111C pour définir la loi d'entraînement des deux équipements par le mouvement des organes 115 et 242. Ainsi une portion de piste axiale sur un barillet n'entraîne aucune rotation de celui-ci lorsque le pion correspondant se déplace le long de celle-ci, ni aucun déplacement de l'organe rattaché. Il s'agit d'une portion de course morte. Par ailleurs une démultiplication du mouvement peut être obtenue en choisissant des longueurs appropriées des ergots formant leviers 11A et 111A.

Selon une variante de réalisation non représentée, on utilise un actionneur dont la tige tourne sur elle-même au lieu de se mouvoir en translation. Dans ce cas on modifie également le mouvement des barillets. Ils sont alors mobiles en translation et la commande des équipements est adaptée en conséquence.

Selon un autre mode de réalisation représenté sur les figures 5 et 5A, on dispose un seul barillet sur la tige de l'actionneur. L'actionneur 24 présente une tige 251 coulissante axialement par rapport au carter 12. La tige commande la rotation d'un guignol 421 agissant sur les aubes à calage variable VSV lorsqu'il pivote autour d'un axe 421A. On prévoit une fente 421F sur l'axe du guignol dans laquelle coulisse un pion 251E solidaire de la tige pour permettre la transformation du mouvement de translation en rotation du guignol. Un barillet 211 est monté sur la tige 251. Comme dans la réalisation précédente, le barillet est monté rotatif et coulissant sur la tige. Il est en revanche immobilisé axialement par rapport au carter 12 qui supporte l'ensemble. La tige comprend une paire de pions 251P radiaux qui coopèrent avec une piste de guidage 211C ménagée sur la paroi du barillet 211. Un ergot radial 251A sur le barillet 211 est relié à l'organe 115 d'actionnement des vannes de décharge VBV.

Le fonctionnement du système de la figure 5 est le suivant sur une partie de la course de la tige 251 depuis une position rentrée, où les vannes de décharge VBV sont en position ouverte et les aubes VSV sont en position fermée. En se déplaçant progressivement vers la droite par rapport à la figure, la tige entraîne les aubes VSV qui s'ouvrent. Pendant cette partie de la course de la tige 251, le barillet 211 pivote autour de l'axe de la tige 251 en raison du profil de la piste de guidage et de la coopération de cette dernière avec les pions 251P. Le profil de la piste est adapté de manière à entraîner la rotation du barillet autour de l'axe de la tige et le déplacement de l'organe de commande des vannes de décharges vers la fermeture. Lorsque les pions 251P se trouvent dans la partie de la piste qui est orientée dans l'axe de la tige, le barillet ne tourne plus alors même que la tige continue de s'étendre et poursuit l'ouverture des aubes de stator VSV. En fin de course les vannes de décharges sont fermées et les aubes sont ouvertes. Cette succession d'opérations est réversible.

On peut selon une variante inverser les commandes des aubes de stator VSV avec celles des ouvertures de décharges VBV.

On peut également modifier le fonctionnement de la tige en mouvement de rotation.

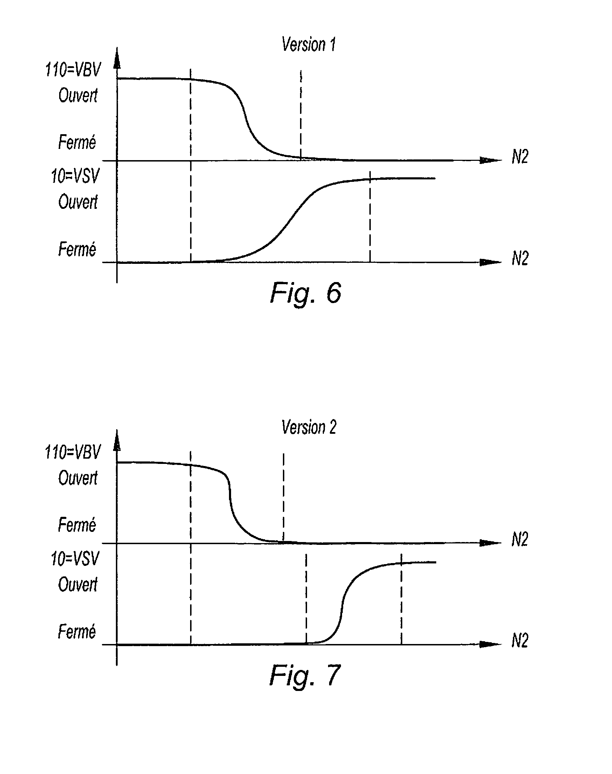

En se référant aux figures 6 et 7, on voit les lois d'ouverture relative des aubes à calage variable (référencées 10 ou VSV) et des vannes de décharge (référencées 110 ou VBV) en fonction de la vitesse de rotation N2 du corps HP. A vitesse nulle les vannes de décharges sont ouvertes et les aubes à calage variable sont fermées. Dans la version V1 représentée sur la figure 7, à mesure que le vitesse N2 croît l'ouverture des aubes à calage variables VSV débute en même temps que la fermeture des vannes de décharge VBV mais se termine après, alors que dans la version V2, représentée par la figure 7, elle ne débute qu'après leur fermeture. Le choix d'une version et le moment précis où débute la fermeture des vannes de décharge sont définis par le profil des pistes de guidage ménagées sur les barillets. Un allongement des portions de piste axiales sur le barillet 111 ou le barillet 211 retarde le début de la fermeture des vannes de décharge, alors que son raccourcissement l'avance.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de commande d'au moins deux équipements (10, 110) à géométrie variable d'un moteur à turbine à gaz, le moteur comportant au moins un premier corps tournant à une première vitesse et un deuxième corps tournant à une deuxième vitesse, le premier équipement (10) étant un étage d'aubes de stator à angle de calage variable d'un compresseur du premier corps évoluant entre une position fermée au ralenti et une position ouverte à fort régime, le second équipement (110) étant au moins une vanne de décharge d'un compresseur du deuxième corps évoluant entre une position ouverte au ralenti et une position fermée à fort régime, le système comportant en outre un actionneur (24) qui actionne les deux équipements **caractérisé par le fait que** l'actionneur (24) commande une tige (241, 251) sur laquelle est monté un organe de commande à barillet (11, 111 ;211), l'organe de commande à barillet entraînant l'un des deux équipements et étant lié à ladite tige par une liaison par laquelle il est entraîné, ladite liaison comprenant un pion (241P1, 241P2 ; 251P) mobile dans une piste de guidage (11C, 111C ; 211C), le profil de la piste de guidage déterminant la loi d'actionnement dudit équipement en fonction du déplacement de la tige (241 ; 251) de l'actionneur.

2. Système de commande selon la revendication 1 dans lequel le premier corps est un corps haute pression et le deuxième corps un corps basse pression.

3. Système de commande selon l'une des revendications 1 ou 2 dans lequel l'actionneur (24) est commandé en fonction de la vitesse de rotation d'un des corps du moteur.

4. Système de commande selon la revendication 3 dans lequel l'actionneur (24) est commandé par la vitesse de rotation du corps haute pression.

5. Système selon la revendication précédente dont la tige (251) entraîne l'autre équipement.

6. Système selon la revendication 4 comprenant un deuxième organe de commande à barillet (111) entraînant l'autre équipement et étant entraîné par la tige (241) également par une liaison comprenant un pion (241P2) mobile dans une piste de guidage (111C), le profil de la piste de guidage déterminant la loi d'actionnement dudit autre équipement en fonction du déplacement de la tige (241) commandée par l'actionneur.

7. Système de commande selon l'une des revendications 4 à 6 combinée à la revendication 4 dans lequel les lois d'actionnement des équipements comprennent chacune une plage d'actionnement, la plage d'actionnement de l'un des équipements étant incluse dans la plage d'actionnement de l'autre équipement.

8. Système de commande selon l'une des revendications 4 à 6 dans lequel les lois d'actionnement des équipements comprennent chacune une plage d'actionnement, la plage d'actionnement du second équipement (110) étant entièrement hors de la plage de fonctionnement du premier équipement (10).

9. Moteur à turbine à gaz comportant un système de commande selon l'une des revendications ci-dessus.

## Claims

1. A system for controlling at least two variable geometry equipment items (10, 110) of a gas turbine engine, the engine comprising at least a first core rotating at a first speed and a second core rotating at a second speed, the first equipment item (10) being a variable-angle stator vane stage of a compressor of the first core moving between a closed position when idling and an open position at high speed, the second equipment item (110) being at least one bleed valve of a compressor of the second core moving between an open position when idling and a closed position at high speed, said system including an actuator (24) which actuates both equipment items **characterized in that** the actuator (24) controls a rod (241, 251) on which is mounted a barrel control member (11, 111; 211), the barrel control member driving one of the two equipment items and being linked to said rod by a link via which it is driven, said link comprising a pin (241P1, 241P2; 251P) that is mobile in a guiding track (11C, 111C; 211C), the profile of the guiding track determining the actuation law for said equipment item according to the displacement of the rod (241; 251) of the actuator.

2. The control system as claimed in claim 1, in which the first core is a high-pressure core and the second core is a low-pressure core.

3. The control system as claimed in one of claims 1 or 2, in which the actuator (24) is controlled according to the speed of rotation of one of the cores of the engine.

4. The control system as claimed in claim 3, in which the actuator (24) is controlled by the speed of rotation of the high-pressure core.

5. The system as claimed in the preceding claim in which the rod (251) drives the other equipment item.

6. The system as claimed in claim 4, comprising a second barrel control member (111) driving the other equipment item and being driven by the rod (241) also by a link comprising a pin (241P2) that is mobile in a guiding track (111C), the profile of the guiding track determining the actuation law for said other equipment item according to the displacement of the rod (241) controlled by the actuator.

7. The control system as claimed in one of claims 4 to 6, in which the actuation laws for the equipment items each comprise an actuation band, the actuation band of one of the equipment items being included within the actuation band of the other equipment item.

8. The control system as claimed in one of claims 4 to 6, in which the actuation laws for the equipment items each comprise an actuation band, the actuation band of the second equipment item (110) being entirely outside of the operating band of the first equipment item (10).

9. A gas turbine engine comprising a control system as claimed in one of the above claims.

## Patentansprüche

1. System zum Steuern von zumindest zwei Geräten (10, 110) mit variabler Geometrie eines Gasturbinenmotors, wobei der Motor zumindest einen ersten Drehkörper mit einer ersten Drehzahl und einen zweiten Drehkörper mit einer zweiten Drehzahl umfasst, und das erste Gerät (10) eine Statorschaufelstufe mit variablem Anstellwinkel eines Kompressors des ersten Körpers ist, die sich zwischen einer geschlossenen Stellung im Leerlauf und einer offenen Stellung mit hoher Drehzahl bewegt, und das zweite Gerät (110) zumindest ein Ablassventil eines Kompressors des zweiten Körpers ist, das sich zwischen einer offenen Stellung im Leerlauf und einer geschlossenen Stellung mit hoher Drehzahl bewegt, wobei das System darüber hinaus ein Stellglied (24) umfasst, das die beiden Geräte betätigt, durch die Tatsache gekennzeichnet, dass das Stellglied (24) eine Stange (241, 251) ansteuert, auf der ein Steuerorgan mit einer Trommel (11, 111; 211) montiert ist, und das Steuerorgan mit der Trommel eines der beiden Geräte antreibt, und über eine Kopplung mit der besagten Stange verbunden ist, durch die er angetrieben wird, wobei die besagte Kopplung einen Stift (241 P1, 241 P2, 251 P) umfasst, der sich in einer Führungslauffläche (11C, 111C; 211 C) bewegt, und das Profil der Führungslauffläche die Betätigungskennlinie des besagten Gerätes in Abhängigkeit von der Bewegung der Stange (241; 251) des Stellgliedes bestimmt.

2. Steuerungssystem nach Anspruch 1, bei dem der erste Körper ein Hochdruckkörper und der zweite Körper ein Niederdruckkörper ist.

3. Steuerungssystem nach einem der Ansprüche 1 oder 2, bei dem das Stellglied (24) in Abhängigkeit von der Drehzahl eines der Motorkörper angesteuert wird.

4. Steuerungssystem nach Anspruch 3, bei dem das Stellglied (24) durch die Drehzahl des Hochdruckkörpers angesteuert wird.

5. System nach dem vorherigen Anspruch, dessen Stange (251) das andere Gerät antreibt.

6. System nach Anspruch 4, umfassend ein zweites Steuerorgan mit Trommel (111), das das andere Gerät antreibt, und das von der Stange (241) ebenfalls durch eine Kopplung umfassend einen Stift (241 P2), der sich in einer Führungslauffläche (111C) bewegt, angetrieben wird, wobei das Profil der Führungslauffläche die Betätigungskennlinie des besagten anderen Gerätes in Abhängigkeit von der Bewegung der vom Stellglied angesteuerten Stange (241) bestimmt.

7. Steuerungssystem nach einem der Ansprüche 4 bis 6 in Verbindung mit dem Anspruch 4, bei dem die Betätigungskennlinien der Geräte jeweils einen Betätigungsbereich umfassen, wobei der Betätigungsbereich eines der Geräte im Betätigungsbereich des anderen Gerätes enthalten ist.

8. Steuerungssystem nach einem der Ansprüche 4 bis 6, bei dem die Betätigungskennlinien der Geräte jeweils einen Betätigungsbereich umfassen, und der Betätigungsbereich des zweiten Gerätes (110) vollkommen außerhalb des Betriebsbereiches des ersten Gerätes (10) liegt.

9. Gasturbinenmotor umfassend ein Steuerungssystem nach einem der oben genannten Ansprüche.
